# EUROPEAN PATENT APPLICATION

(11) **EP 4 610 713 A1**
(43) Date of publication of application: **03.09.2025**
(21) Application number: 25160344.5
(22) Date of filing: 26.02.2025
(51) Int. Cl.: G02B 26/10, G02B 27/00, G03G 21/16

(54) **OPTICAL SCANNING DEVICE, IMAGE FORMING APPARATUS, AND METHOD FOR DISASSEMBLING OPTICAL SCANNING DEVICE**

(30) Priority: 01.03.2024 JP 2024031168
(71) Applicant: Kyocera Document Solutions Inc., Osaka-shi, Osaka 540-8585 (JP)
(72) Inventor: Yoshida, Shingo, Osaka, 540-8585 (JP)
(74) Representative: BRP Renaud & Partner mbB Rechtsanwälte Patentanwälte Steuerberater

(57) **Abstract**

An optical scanning device (100) includes a scanning optical system (1), a housing (2), and a lid member (3). The housing (2) includes a groove portion (221) depressed inward from a laterally outer side of a side wall portion (22) and that extends in an up-down direction, and a side-wall engagement portion (222) disposed in the groove portion (221). The lid member (3) includes a suspended portion (321) hanging down from a peripheral portion (32) thereof, and a suspended engagement portion (322) disposed in the suspended portion (321). The groove portion (221) penetrates the side wall portion (22) in the up-down direction as seen from the up-down direction, and, in a state where the lid member (3) is attached to the housing (2), the suspended portion (321) is located in the groove portion (221) as a result of being inserted into the groove portion (221) from above, with the side-wall engagement portion (222) in engagement with the suspended engagement portion (322) in the up-down direction.

## Description

### BACKGROUND

The present disclosure relates to an optical scanning device, an image forming apparatus, and a method for disassembling an optical scanning device.

Conventional optical scanning devices are provided with a scanning optical system that includes a mirror, a lens, etc. The scanning optical system is housed in an optical box. The optical box consists of a housing having an open top, and a lid member covering the open top of the housing. A region enclosed by the housing and the lid member is a housing region for the scanning optical system.

### SUMMARY

According to a first aspect of the present disclosure, an optical scanning device includes a scanning optical system, a housing, and a lid member. The scanning optical system deflects and scans light emitted from a light source. The housing includes a bottom portion and a side wall portion standing upright from the bottom portion, and houses the scanning optical system in a housing region which is a region enclosed by the bottom portion and the side wall portion. The lid member includes a top surface portion that covers the housing region from above and a peripheral portion disposed outside the side wall portion in a lateral direction. The housing includes a groove portion and a side-wall engagement portion. The groove portion is depressed inward from a laterally outer side of the side wall portion and extends in an up-down direction. The side-wall engagement portion is disposed in the groove portion. The lid member includes a suspended portion and a suspended engagement portion. The suspended portion hangs downward from the peripheral portion. The suspended engagement portion is disposed in the suspended portion. The groove portion penetrates the side wall portion in the up-down direction as seen from the up-down direction. In a state where the lid member is attached to the housing, the suspended portion is located in the groove portion as a result of being inserted from above into the groove portion, with the side-wall engagement portion in engagement with the suspended engagement portion in engagement in the up-down direction.

According to a second aspect of the present disclosure, an image forming apparatus includes the optical scanning device described above.

According to a third aspect of the present disclosure, an optical-scanning-device disassembling method is a method for disassembling the optical scanning device described above, the method including the steps of placing a jig under the housing to which the lid member is attached, inserting the jig into the groove portion from under the housing to cause the jig to reach an engagement position of the side-wall engagement portion and the suspended engagement portion, and inserting the jig into a lateral space between the groove portion and the suspended portion to elastically deform the suspended portion in a direction away from the groove portion to thereby disengage the side-wall engagement portion and the suspended engagement portion from each other.

### BRIEF DESCRIPTION OF THE DRAWINGS

FIG. 1 is a diagram schematically illustrating an image forming apparatus according to an embodiment.
FIG. 2 is a diagram schematically illustrating an image forming portion according to the embodiment.
FIG. 3 is a diagram schematically illustrating a scanning optical system according to the embodiment.
FIG. 4 is a perspective view illustrating a state where a lid member is attached to a housing according to the embodiment.
FIG. 5 is a perspective view (as seen from a different direction than in FIG. 4) illustrating the state where the lid member is attached to the housing according to the embodiment.
FIG. 6 is a perspective view illustrating a state where the lid member is detached from the housing according to the embodiment.
FIG. 7 is a perspective view of and around a groove portion according to the embodiment.
FIG. 8 is a perspective view of and around a groove portion according to the embodiment (a groove portion of a sub-wall portion that is different from the sub-wall portion illustrated in FIG. 7).
FIG. 9 is a perspective view of and around a groove portion according to the embodiment (a groove portion of a sub-wall portion that is different from the sub-wall portions illustrated in FIGS. 7 and 8).
FIG. 10 is a plan view of and around the groove portion according to the embodiment as seen from above.
FIG. 11 is a diagram schematically showing states before and after a suspended portion is inserted into the groove portion according to the embodiment.
FIG. 12 is a side view of a sub-wall portion according to the embodiment.
FIG. 13 is a side view of a sub-wall portion according to the embodiment (a sub-wall portion different from the sub-wall portion illustrated in FIG. 12).
FIG. 14 is a side view of a sub-wall portion according to the embodiment (different from the sub-wall portions illustrated in FIGS. 12 and 13).
FIG. 15 is a side view of a sub-wall portion according to the embodiment (different from the sub-wall portions illustrated in FIGS. 12 to 14).
FIG. 16 is a schematic diagram illustrating shapes of a leading end surface of the suspended portion and an upper end surface of the groove portion according to the embodiment.
FIG. 17 is a perspective view of a jig used in a process of disassembling an optical scanning device according to the embodiment.
FIG. 18 is a perspective view illustrating a state where the jig is placed under the housing according to the embodiment.
FIG. 19 is a perspective view illustrating a state where the jig is inserted in the groove portion, both according to the embodiment.
FIG. 20 is a perspective view illustrating a state where the jig is inserted in a lateral space between the groove portion and the suspended portion according to the embodiment.
FIG. 21 is a diagram schematically illustrating state transition occurring when the lid member is detached from the housing according to the embodiment.
FIG. 22 is a diagram illustrating a flow of steps in disassembling the optical scanning device according to the embodiment.

### DETAILED DESCRIPTION

Hereinafter, a description will be given of an image forming apparatus that includes an optical scanning device according to one embodiment of the present disclosure, by taking a tandem-type color laser printer as an example. Note that the application of the present disclosure is not limited to printers, but the present disclosure is also applicable to multifunction peripherals having functions including a copy function and the like. Moreover, the application of the present disclosure is not limited to color machines, but the present disclosure is also applicable to monochrome machines.

### <Configuration of Image Forming Apparatus>

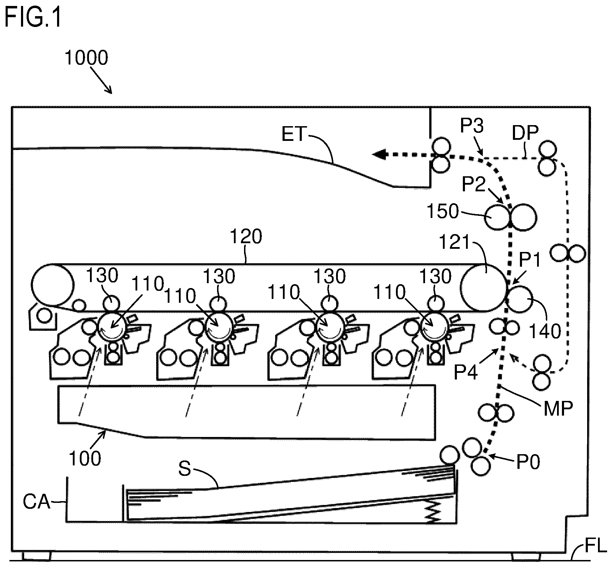

As shown in FIG. 1, an image forming apparatus 1000 according to the present embodiment is installed on a floor surface FL that is substantially flat. An up-down direction of the image forming apparatus 1000 is a direction that is perpendicular to the floor surface FL.

The image forming apparatus 1000 includes a sheet cassette CA. The sheet cassette CA accommodates a plurality of sheets S in a stacked manner. In a print job, the sheets S in the sheet cassette CA are used. The sheet cassette CA is attachable and detachable with respect to a main body of the image forming apparatus 1000.

The image forming apparatus 1000 includes a main conveyance path MP. The main conveyance path MP extends from a supply position P0, via a transfer position P1 and a fixing position P2, to an ejection tray ET.

In a print job, a sheet S in the sheet cassette CA is fed from the supply position P0 into the main conveyance path MP. The sheet S is conveyed along the main conveyance path MP. Meanwhile, an image is formed using toner. Then, the image is printed on the sheet S being conveyed. In other words, image transfer processing with respect to the sheet S being conveyed is performed at the transfer position P1. At the fixing position P2, fixing processing is performed with respect to the sheet S.

The image forming apparatus 1000 includes an optical scanning device 100. A configuration of the optical scanning device 100 will be described later.

The image forming apparatus 1000 further includes four image forming portions 110. The four image forming portions 110 respectively correspond to cyan, magenta, yellow, and black. Each of the four image forming portions 110 forms an image using a toner in its corresponding color. The following description will focus on one of the image forming portions 110. As configurations of all the four image forming portions 110 are identical to each other, the following description also applies to the other image forming portions 110, and descriptions of their configurations will be omitted.

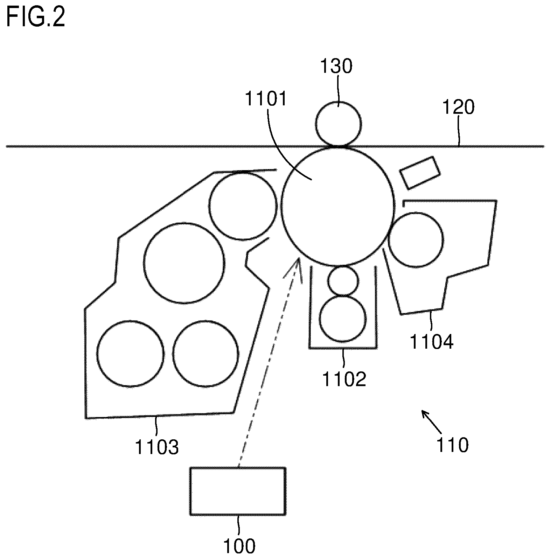

The image forming portion 110 is illustrated in detail in FIG. 2. The image forming portion 110 includes a photosensitive drum 1101. The photosensitive drum 1101 is rotatably supported. The image forming portion 110 causes the image formed using toner to be carried on an outer circumferential surface of the photosensitive drum 1101. The photosensitive drum 1101 rotates carrying the toner image on its outer circumferential surface.

The image forming portion 110 includes a charging device 1102, a developing device 1103, and a cleaning device 1104. During image formation performed by the image forming portion 110, the photosensitive drum 1101 rotates. The charging device 1102 charges the outer circumferential surface of the photosensitive drum 1101. With respect to the thus charged outer circumferential surface of the photosensitive drum 1101, the optical scanning device 100 performs scanning exposure. Thereby, an electrostatic latent image is formed on the outer circumferential surface of the photosensitive drum 1101. That is, the outer circumferential surface of the photosensitive drum 1101 is a scanned surface.

The developing device 1103 supplies toner to the outer circumferential surface of the photosensitive drum 1101, and develops the electrostatic latent image into a toner image. The cleaning device 1104 removes residual toner remaining on the outer circumferential surface of the photosensitive drum 1101 without being transferred onto an intermediate transfer belt 120, which will be described later.

As illustrated in FIG. 1, the image forming apparatus 1000 further includes the intermediate transfer belt 120. The intermediate transfer belt 120 is an endless belt. The intermediate transfer belt 120 is rotatably supported. The intermediate transfer belt 120 is stretched by a plurality of stretch rollers.

One of the plurality of stretch rollers is couped to a belt motor (unillustrated). In the following description, the stretch roller that is coupled to the belt motor will be referred to as a drive roller. In FIG. 1, among the plurality of stretch rollers, the reference sign 121 is given to the drive roller, and reference signs for the other stretch rollers are omitted. As the drive roller 121 rotates, the intermediate transfer belt 120 rotates following the rotation of the drive roller 121. The other stretch rollers rotate following the rotation of the intermediate transfer belt 120.

The image forming apparatus 1000 includes four primary transfer rollers 130. The four primary transfer rollers 130 respectively correspond to cyan, magenta, yellow, and black. The primary transfer rollers 130 are each disposed on an inner circumferential surface side of the intermediate transfer belt 120. Each of the primary transfer rollers 130 faces the photosensitive drum 1101, which carries the image in its corresponding color, via the intermediate transfer belt 120. Each of the primary transfer rollers 130 is pressed against the photosensitive drum 1101, which carries the image in its corresponding color, via the intermediate transfer belt 120.

The image forming apparatus 1000 includes a secondary transfer roller 140. The secondary transfer roller 140 is pressed against an outer circumferential surface of the intermediate transfer belt 120 at the transfer position P1. The secondary transfer roller 140 and the drive roller 121 nip the intermediate transfer belt 120 therebetween, so that the transfer nip is formed between the secondary transfer roller 140 and the outer circumferential surface of the intermediate transfer belt 120. Thereby, the transfer nip is formed at the transfer position P1. The main conveyance path MP passes through the transfer nip.

In a print job, a sheet S is conveyed toward the transfer position P1 (that is, the transfer nip). The sheet S being conveyed passes through the transfer nip.

Each of the image forming portions 110 forms an image using toner in its corresponding color. Each of the primary transfer rollers 130 primarily transfers the image onto the outer circumferential surface of the intermediate transfer belt 120.

The intermediate transfer belt 120 rotates carrying, on its outer circumferential surface, the images having been primarily transferred thereto from the photosensitive drums 1101. The sheet S, while passing through the transfer nip, makes contact with the outer circumferential surface of the intermediate transfer belt 120. The secondary transfer roller 140 secondarily transfers the images with respect to the sheet S while it is passing through the transfer nip.

The image forming apparatus 1000 includes a fixing portion 150. The fixing portion 150 includes a heat roller and a pressure roller. The fixing portion 150 is disposed at the fixing position P2. The heat roller incorporates a heater. The pressure roller is pressed against the heat roller. The heat roller and the pressure roller are pressed against each other to form a fixing nip at the fixing position P2.

In a print job, a sheet S passes through the fixing position P2. That is, the sheet S is nipped in the fixing nip. The fixing portion 150 applies heat to the sheet S while it is passing through the fixing position P2. At the fixing position P2, pressure is applied to the sheet S. The fixing portion 150 applies heat and pressure to the sheet S to thereby fix a toner image on the sheet S. The sheet S is ejected onto the ejection tray ET after it is subjected to the fixing processing.

The image forming apparatus 1000 is capable of performing a duplex print job for printing images on both surfaces of a sheet S, as well as a simplex print job for printing an image on one surface of a sheet S only. For the purpose of executing a duplex print job, the image forming apparatus 1000 is equipped with a duplex printing conveyance path DP.

The duplex printing conveyance path DP branches off from the main conveyance path MP at a branching position P3, which is a position located downstream of the fixing position P2 in the main conveyance path MP with respect to a sheet conveyance direction. Then, the duplex printing conveyance path DP joins the main conveyance path MP at a confluence position P4, which is a position located upstream of the transfer position P1 in the main conveyance path MP with respect to the sheet conveyance direction.

In a simplex print job, a sheet S passes through the transfer nip only once, and thus is subjected to a single execution of transfer processing while passing through the transfer nip. Then, after the single execution of transfer processing, the sheet S is ejected as it is onto the ejection tray ET.

In a duplex print job, in which transfer processing is executed once on each of the front and back surfaces of a sheet S, the sheet S passes through the transfer nip twice. Specifically, when the sheet S passes through the transfer nip for a first time, transfer processing is performed with respect to one surface of the sheet S. After the first transfer processing, after a rear end of the sheet S passes the branching position P3 but before the sheet S is fully ejected onto the ejection tray ET, the sheet S is reversed. As a result, the sheet S is pulled into the duplex printing conveyance path DP, with its rear end first.

Thereafter, the sheet S is conveyed along the duplex printing conveyance path DP. Then, the sheet on the duplex printing conveyance path DP is returned from the confluence position P4 back into the main conveyance path MP. Back in the main conveyance path MP, the sheet S is conveyed along the main conveyance path MP to pass through the transfer nip again. At this time, the sheet S has been turned over so that its front and back surfaces each face an opposite direction compared to when it previously passed through the transfer nip. In this manner, when the sheet S passes through the transfer nip for a second time, transfer processing is performed on the other surface, which is opposite to the one surface, of the sheet S.

### <Configuration of Optical Scanning Device>

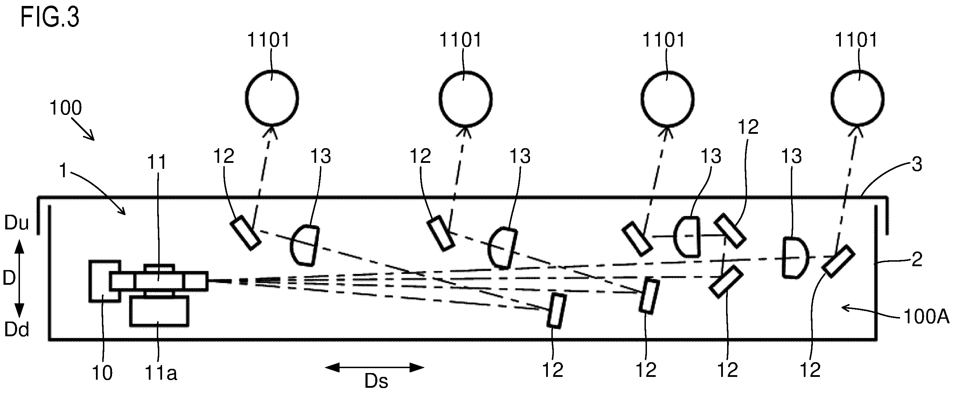

As illustrated in FIG. 3, the optical scanning device 100 includes a scanning optical system 1. The scanning optical system 1 includes a light source 10. The scanning optical system 1 deflects and scans light emitted from the light source 10, and thereby forms an electrostatic latent image on the outer circumferential surface of the photosensitive drum 1101.

The light source 10 includes a plurality of semiconductor lasers respectively corresponding to cyan, magenta, yellow, and black. The semiconductor lasers emit laser light for forming electrostatic latent images based on which images in their corresponding colors are to be formed.

The scanning optical system 1 includes a polygon mirror 11. The polygon mirror 11 is a rotating multi-surface mirror having a plurality of reflective surfaces. The polygon mirror 11 is caused to rotate by a driving force transmitted from a polygon motor 11a. While the polygon mirror 11 is rotating, light emitted from the light source 10 enters the reflective surfaces of the polygon mirror 11. The polygon mirror 11 rotates to thereby deflect and scan the light incident on its reflective surfaces.

The scanning optical system 1 includes a light reflection mirror 12 and a scanning lens 13. As the scanning lens 13, an fθ lens is used. Alternatively, a collimator lens, a cylindrical lens, or the like may be mounted as the scanning lens 13. By the polygon mirror 11, the light reflection mirror 12, and the scanning lens 13, light emitted from the light source 10 is directed to the outer circumferential surface of the photosensitive drum 1101.

The optical scanning device 100 includes a housing 2 and a lid member 3. The housing 2 and the lid member 3 are each made of resin. The housing 2 has a shape of a box having an open top. The lid member 3 is disposed on the open top of the housing 2. In other words, the lid member 3 closes the open top of the housing 2 from above. The scanning optical system 1 is housed in a region 100A enclosed by the housing 2 and the lid member 3. In the following description, the region 100A will be referred to as a housing region 100A.

### <Configurations of Housing and Lid Member>

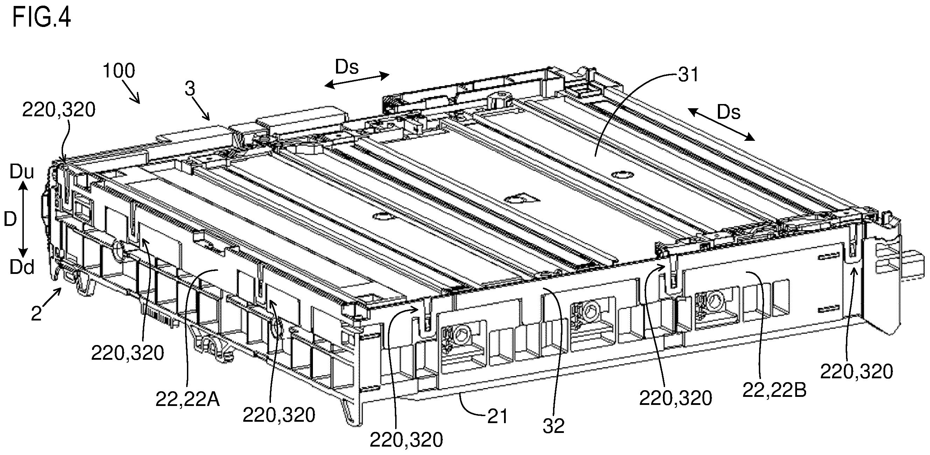

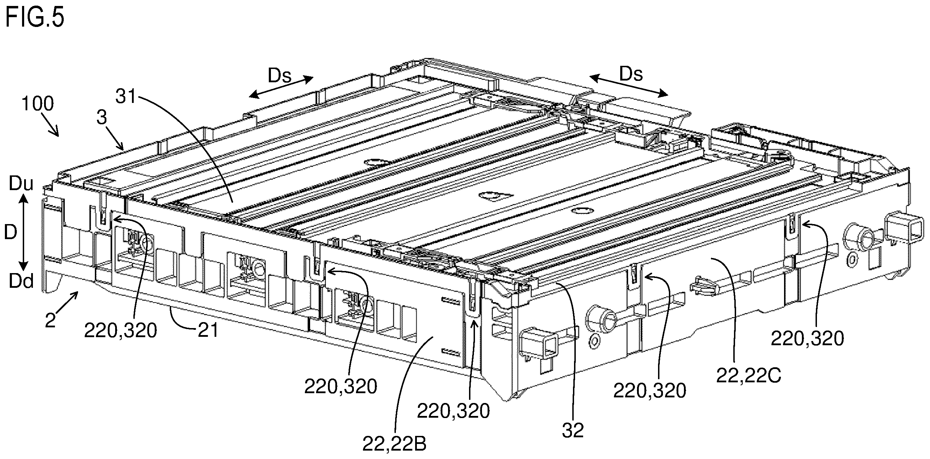

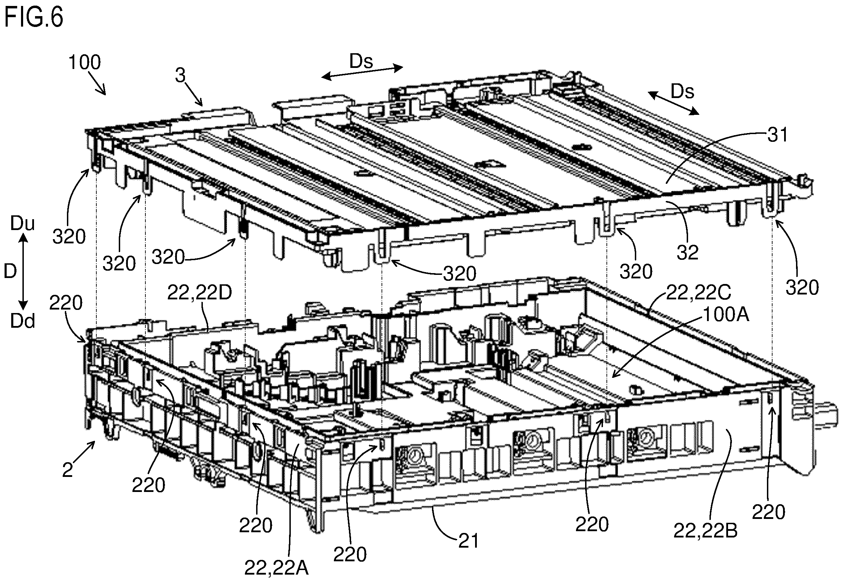

Hereinafter, with reference to FIG. 4 to FIG. 16, configurations of the housing 2 and the lid member 3 will be described. In the figures, an up-down direction of the optical scanning device 100 is indicated by an arrow D. The up-down direction includes an upward direction indicated by a sign Du and a downward direction indicated by a sign Dd.

Further, in the following description, a direction orthogonal to the up-down direction will be referred to as a lateral direction. In the figures, the lateral direction is indicated by an arrow Ds. Furthermore, in the following description, the lateral direction includes an inward lateral direction, which is a direction toward a center of the housing region 100A, and an outward lateral direction, which is a direction away from the center of the housing region 100A. In the figures, the inward lateral direction is represented by "In" and the outward lateral direction is represented by "Out".

The housing 2 includes a bottom portion 21 as shown in FIG. 4 to FIG. 6. The bottom portion 21 covers the housing region 100A from below. In other words, a region over the bottom portion 21 is the housing region 100A. The bottom portion 21 has a substantially rectangular contour as seen from the up-down direction.

The housing 2 includes a side wall portion 22. The side wall portion 22 stands upright from the bottom portion 21. The side wall portion 22 laterally encloses the housing region 100A. That is, the housing 2 has a region enclosed by the bottom portion 21 and the side wall portion 22 as the housing region 100A.

The side wall portion 22 consists of four sub-wall portions 22A, 22B, 22C, and 22D. The sub-wall portion 22A and 22C are opposite each other in one direction of the lateral direction with the housing region 100A therebetween, and the sub-wall portions 22B and 22D are opposite each other in the other direction of the lateral direction (orthogonal to the one direction of the lateral direction) with the housing region 100A therebetween. In other words, the four sub-wall portions 22A to 22D are arranged, as seen from the up-down direction, so as to enclose the housing region 100A substantially in a rectangular shape.

The lid member 3 includes a top surface portion 31. The top surface portion 31 covers the housing region 100A from above. In other words, the lid member 3 covers the scanning optical system 1 from above. The top surface portion 31 includes an emission port (no reference sign) in which a piece of glass is fitted. Via this emission port, light is emitted.

The lid member 3 includes a peripheral portion 32. The peripheral portion 32, as seen from the up-down direction, corresponds to an edge of the top surface portion 31. The peripheral portion 32 is formed, as seen from the up-down direction, in a shape of a frame around the top surface portion 31. In a state where the lid member 3 is attached to the housing 2, the peripheral portion 32 is disposed outside an upper end part of the side wall portion 22 in the lateral direction. That is, with the lid member 3 attached to the housing 2, the upper end part of the side wall portion 22 is fitted withing the peripheral portion 32 in the lateral direction.

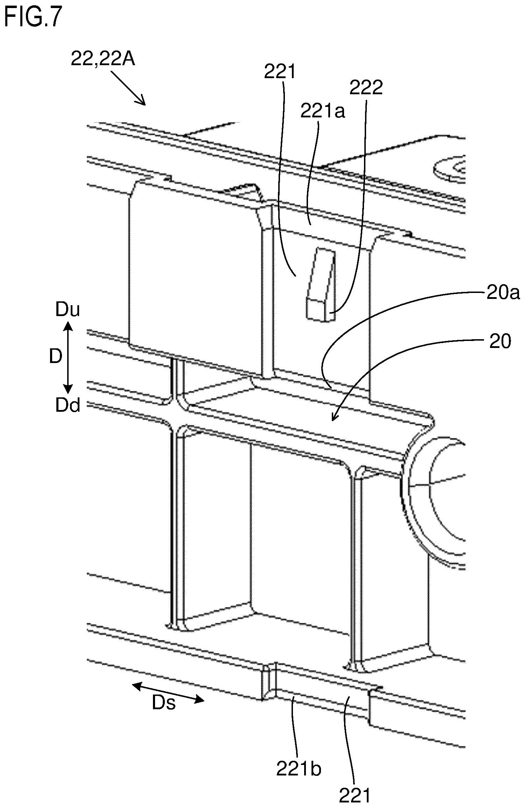

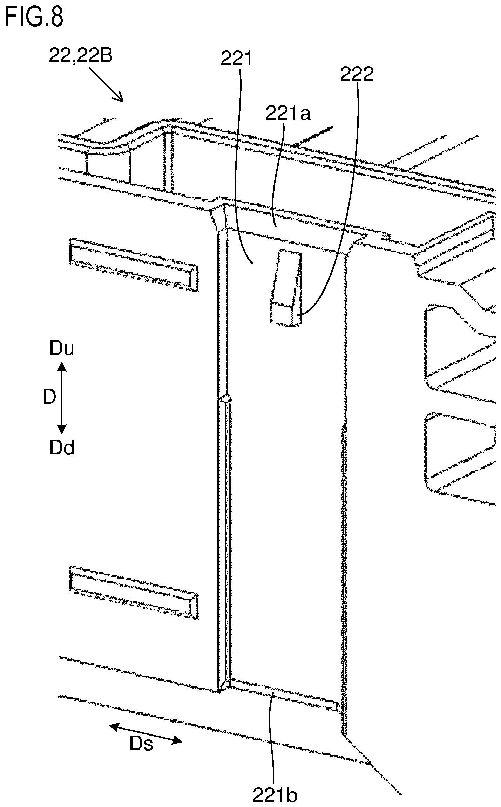

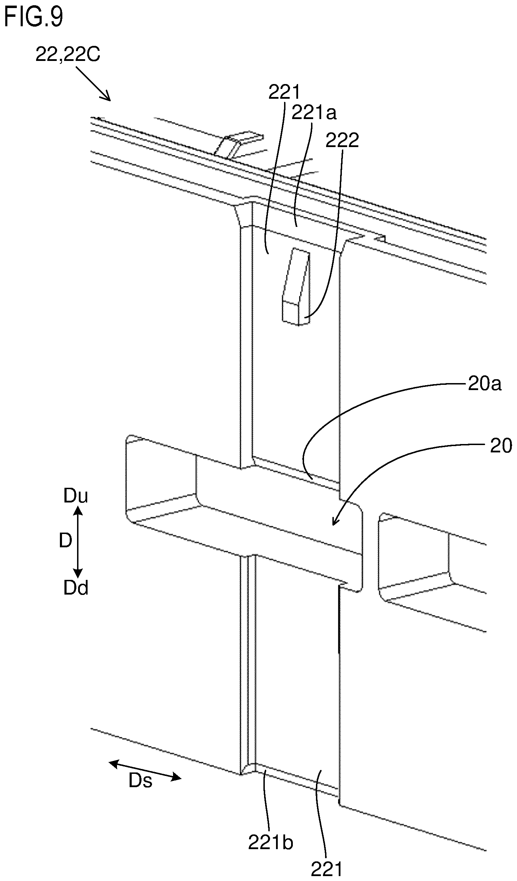

Here, in the present embodiment, the housing 2 includes a groove portion 221. The groove portion 221 is formed in the side wall portion 22 to be depressed inward from a laterally outer side toward a laterally inner side of the side wall portion 22. The groove portion 221 includes a groove portion formed in the sub-wall portion 22A as shown in FIG. 7, a groove portion formed in the sub-wall portion 22B as shown in FIG. 8, and a groove portion formed in the sub-wall portion 22C as shown in FIG. 9.

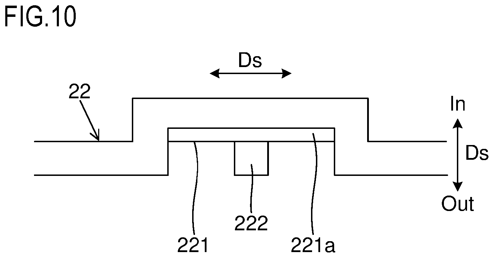

The groove portion 221 extends straight in the up-down direction. Specifically, the groove portion 221, as seen from the up-down direction, penetrates the side wall portion 22 in the up-down direction. The groove portion 221, which extends in the up-down direction in the laterally outer side of the side wall portion 22, is open upward at an upper end of the side wall portion 22 and is open downward at a lower end of the side wall portion 22. The groove portion 221 extends without being closed in the up-down direction. FIG. 10 illustrates a plan view of and around the groove portion 221.

The housing 2 includes a side-wall engagement portion 222. The side-wall engagement portion 222 is disposed in the groove portion 221. Specifically, the side-wall engagement portion 222 is provided, in the groove portion 221, on a surface (herein referred to as a groove bottom surface) of the groove portion 221 facing the outward lateral direction. The side-wall engagement portion 222 is a protrusion that protrudes in the outward lateral direction from the groove bottom surface of the groove portion 221. In the following description, the side-wall engagement portion 222 will be referred to as an engagement protrusion 222. Further, a portion that includes the groove portion 221 and the engagement protrusion 222 will be referred to as a housing attachment portion 220.

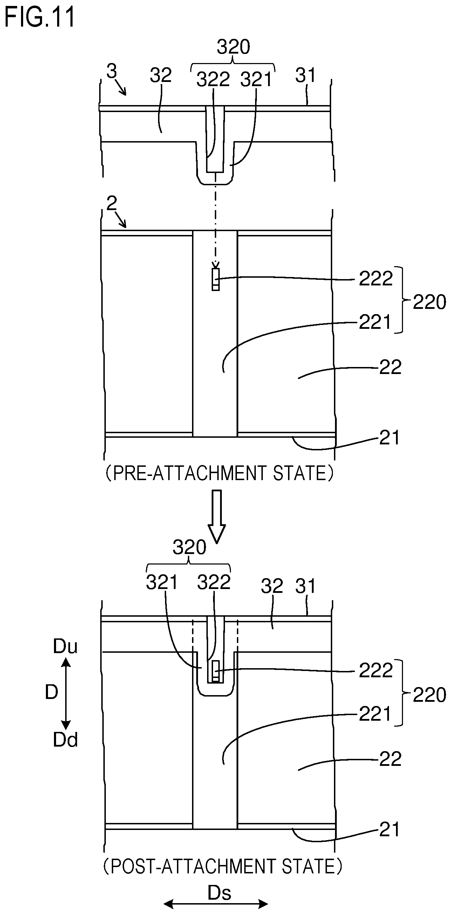

The lid member 3 includes a suspended portion 321 as shown in FIG. 11. The suspended portion 321 is provided in the peripheral portion 32. The suspended portion 321 has a shape hanging down from the peripheral portion 32. That is, the suspended portion 321 protrudes downward from the peripheral portion 32.

The lid member 3 further includes a suspended engagement portion 322 that is engageable with the side-wall engagement portion 222. The suspended engagement portion 322 is disposed in the suspended portion 321. The suspended engagement portion 322 is a through hole that penetrates the suspended portion 321 from a laterally outer side toward a laterally inner side thereof. In the following description, the suspended engagement portion 322 will be referred to as an engagement hole 322. A portion that includes the suspended portion 321 and the engagement hole 322 will be referred to as a lid attachment portion 320.

Note that, the present embodiment includes a plurality of the housing attachment portions 220 (that is, the groove portions 221 and the engagement protrusions 222) and a plurality of the lid attachment portions 320 (that is, the suspended portions 321 and the engagement holes 322). Specifically, the housing attachment portions 220 are disposed on the sub-wall portions 22A to 22D of the side wall portion 22 in the housing, and the lid attachment portions 320, equal in number to the housing attachment portions 220, are disposed on the peripheral portion 32 of the lid member 3.

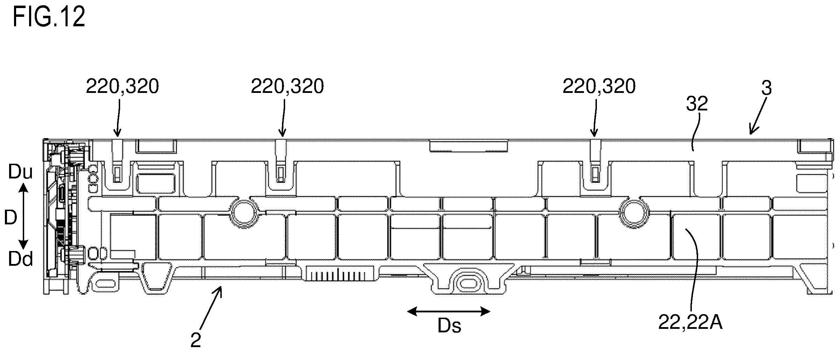

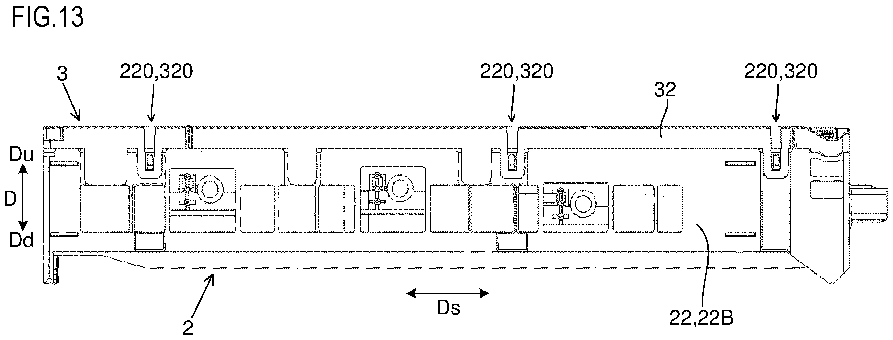

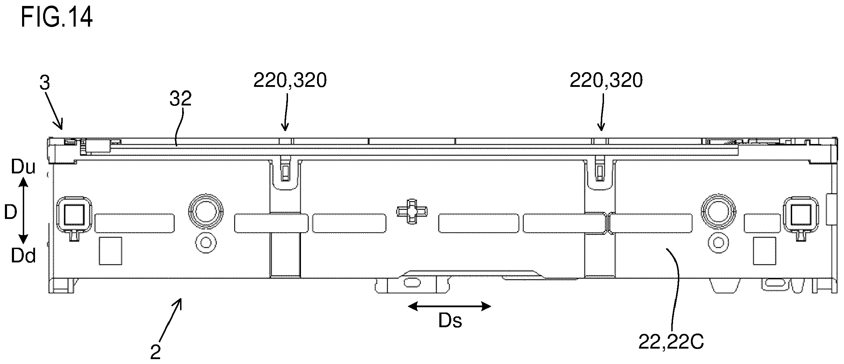

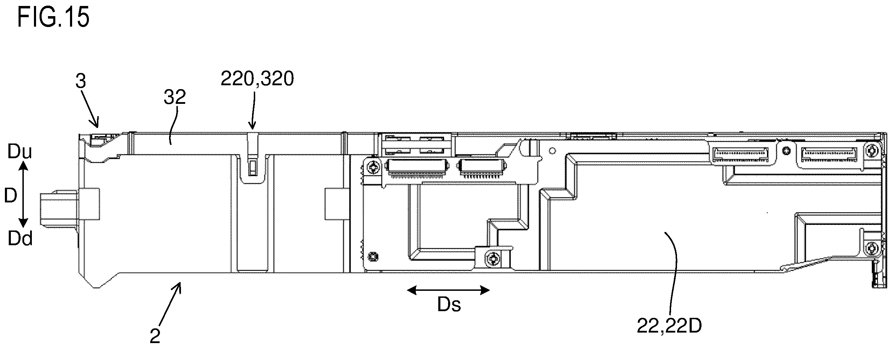

On the sub-wall portion 22A, three of the housing attachment portions 220 are disposed (see FIG. 12). On the sub-wall portion 22B, three of the housing attachment portions 220 are disposed (see FIG. 13). On the sub-wall portion 22C, two of the housing attachment portions 220 are disposed (see FIG. 14). On the sub-wall portion 22D, one of the housing attachment portions 220 is disposed (see FIG. 15). FIG. 12 to FIG. 15 are each a side view of the side wall portion 22 as seen from outside in the lateral direction.

The number and the locations of the housing attachment portions 220 shown in FIG. 12 to FIG. 15 are an example. It is appropriate to dispose one or more housing attachment portions 220 on each of at least three of the sub-wall portions 22A to 22D. For example, with respect to one of the sub-wall portions 22A to 22D, the lid member 3 may be attached in another method.

In a state where the lid member 3 is attached to the housing 2, the plurality of the engagement protrusions 222 are in engagement with different ones of the engagement holes 322. Specifically, as shown in FIG. 11, the suspended portion 321 is inserted into the groove portion 221 from above to thereby place the suspended portion 321 in the groove portion 221. Further, the engagement protrusion 222 is in engagement with an inner edge of the engagement hole 322. In FIG. 11, the upper diagram illustrates a state before the lid member 3 is attached to the housing 2, and the lower diagram illustrates a state after the lid member 3 is attached to the housing 2. The suspended portion 321 is inserted with respect to the groove portion 221 in the direction indicated by the dashed-and-dotted-line arrow in FIG. 11.

This helps prevent the lid member 3 from coming off upward from the housing 2. Further, by disposing the housing attachment portions 220 in three or more of the sub-wall portions 22A to 22D and attaching the lid member 3 to the housing 2 with those housing attachment portions 220, the lid member 3 can be firmly attached to the housing 2. The firm attachment of the lid member 3 with respect to the housing 2 helps prevent entry of dust and the like into the housing region 100A. That is, the optical scanning device 100 is endowed with an improved dust-proofness.

### <Assembly of Optical Scanning Device>

The optical scanning device 100 is assembled through a process that starts with placing the scanning optical system 1 in the housing region 100A of the housing 2. Then, the lid member 3 is placed at a position at which it covers the housing region 100A from above, and then the lid member 3 is attached to the housing 2.

In attaching the lid member 3 to the housing 2, the suspended portion 321 is inserted with respect to the groove portion 221 from above. In that state, the lid member 3 is pushed down with respect to the housing 2. As a result, a leading end of the suspended portion 321 comes into contact with the engagement protrusion 222 from above. Thereafter, with the leading end of the suspended portion 321 in contact with the engagement protrusion 222 from above, the lid member 3 is pushed further down.

At this time, the suspended portion 321 is elastically deformed toward the outward lateral direction. Then, when the engagement hole 322 reaches where the engagement protrusion 222 is located, the engagement protrusion 222 is inserted into the engagement hole 322, and thereby the suspended portion 321 is allowed to restore its original state (that is, a non-elastically-deformed state, in which it is not elastically deformed) from its elastically deformed state. As a result, the engagement protrusion 222 engages with the engagement hole 322 in the up-down direction. That is, a state is achieved where the lid member 3 is attached to the housing 2.

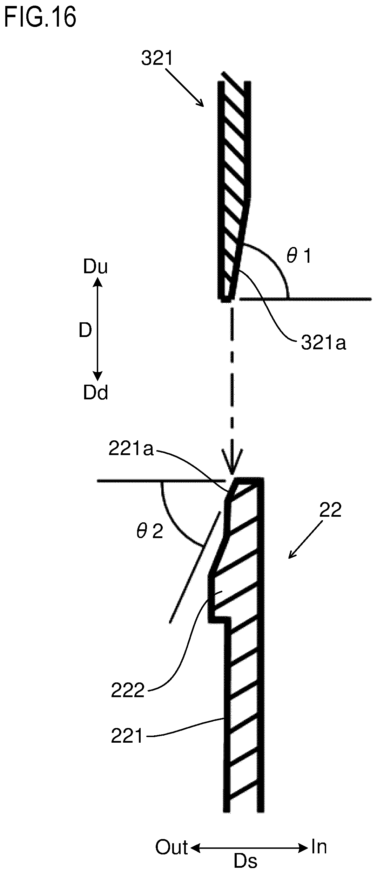

Here, in the present embodiment, as shown in FIG. 16, in a leading end part of the suspended portion 321, a suspended-portion leading-end surface 321a, which faces the inward lateral direction, is inclined in the outward lateral direction toward the downward direction. In an upper end part of the groove portion 221, a groove-portion upper-end surface 221a, which faces the outward lateral direction, is inclined in the inward lateral direction toward the upward direction. And, an inclination angle θ1 of the suspended-portion leading-end surface 321a with respect to a direction orthogonal to the up-down direction is larger than an inclination angle θ2 of the groove-portion upper-end surface 221a with respect to the direction orthogonal to the up-down direction.

The inclination angle θ1 is, in other words, an angle between the suspended-portion leading-end surface 321a and the direction orthogonal to the up-down direction. The inclination angle θ2 is, in other words, an angle between the groove-portion upper-end surface 221a and the direction orthogonal to the up-down direction. Since the inclination angle θ1 is larger than the inclination angle θ2, the leading end of the suspended portion 321 is sharper than the leading end of the groove portion 221.

With this configuration, when the suspended portion 321 is inserted into the groove portion 221 from above (see FIG. 16), the leading end of the suspended portion 321 is unlikely to be caught by the upper end of the groove portion 221. This makes it possible to smoothly insert the suspended portion 321 into the groove portion 221 from above. In FIG. 16, the inserting direction of the suspended portion 321 into the groove portion 221 is indicated by a dashed-and-dotted line arrow. Note that the same effect can be obtained in a case where only one of the suspended-portion leading-end surface 321a and the groove-portion upper-end surface 221a is inclined.

### <Disassembly of Optical Scanning Device>

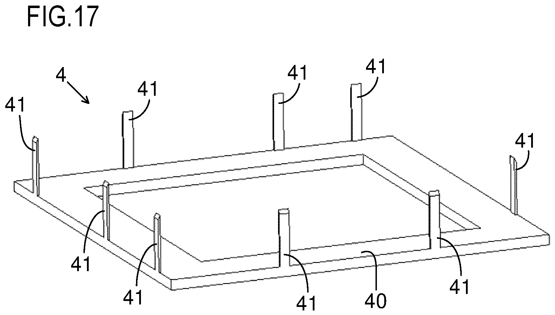

A process of disassembling the optical scanning device 100 is, in other words, a process of detaching the lid member 3 from the housing 2. The process of disassembling the optical scanning device 100 is performed using a jig 4 as illustrated in FIG. 17.

The jig 4 includes a base portion 40. The jig 4 further includes a plurality of detachment portions 41 extending in the upward direction from the base portion 40. The detachment portions 41 each have a sharp leading end. The number of the detachment portions 41 is equal to the number of the housing attachment portions 220 (that is, the number of the groove portions 221). The plurality of detachment portions 41 of the jig 4 each corresponding to one of the plurality of housing attachment portions 220.

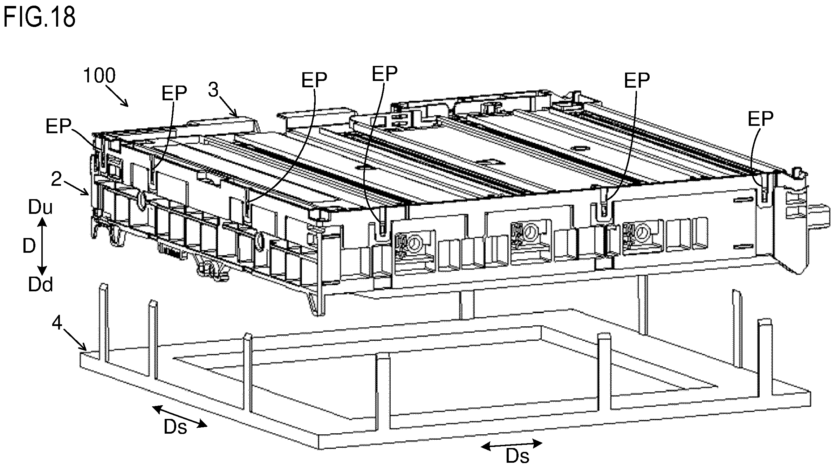

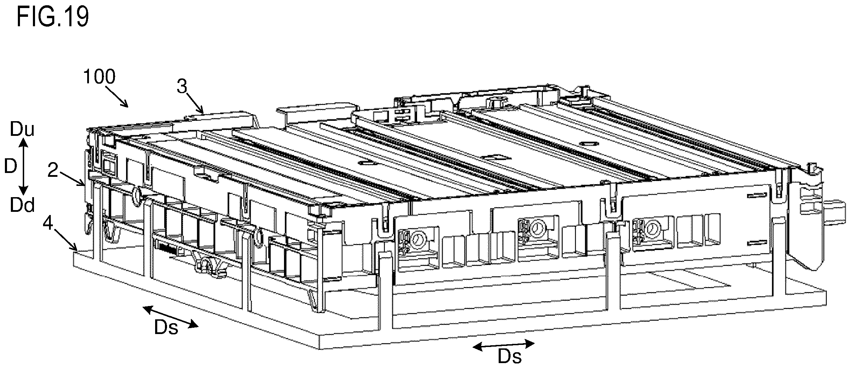

In the process of disassembling the optical scanning device 100 (that is, the process of detaching the lid member 3 from the housing 2), first, the jig 4 is placed under the housing 2 to which the lid member 3 is attached (see FIG. 18). At this time, the positions of the groove portion 221 and the detachment portions 41 in the lateral direction are aligned with each other. In that state, the housing 2 is moved in the downward direction toward the jig 4. As a result, the jig 4 is inserted into the groove portions 221. Specifically, the leading ends of the detachment portions 41 are inserted into the groove portions 221 (see FIG. 19).

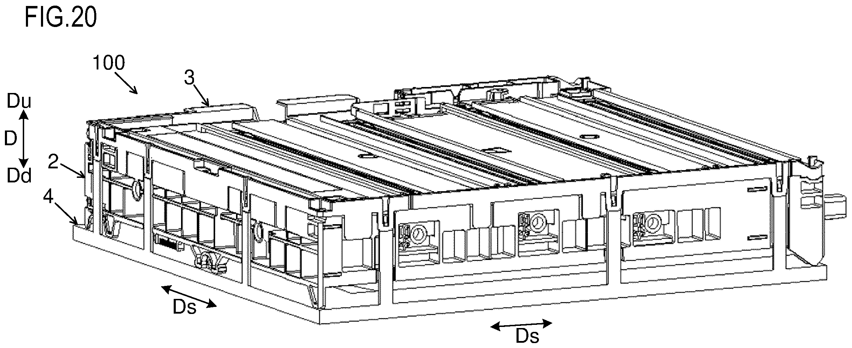

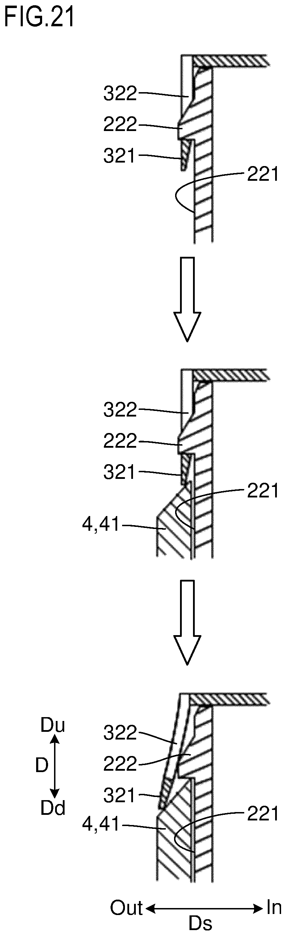

Next, with the jig 4 inserted in the groove portions 221, the housing 2 is pushed down to insert the jig 4 into lateral spaces between the groove portions 221 and the suspended portions 321. Specifically, the leading ends of the detachment portions 41 are inserted into the lateral spaces between the groove portions 221 and the suspended portions 321 (see FIG. 20). As a result, the state illustrated in the upper diagram of FIG. 21 shifts to the state illustrated in the middle diagram of FIG. 21.

As a result of the insertion of the jig 4 into the lateral spaces between the groove portions 221 and the suspended portion 321, the suspended portions 321 are elastically deformed in the outward lateral direction. In other words, the suspended portions 321 are each deformed in a direction away from a corresponding one of the groove portions 221. That is, the state illustrated in the middle diagram of FIG. 21 shifts to the state illustrated in the lower diagram of FIG. 21. In this manner, the engagement protrusions 222 are disengaged from the engagement holes 322. As a result, the lid member 3 can be detached from the housing 2.

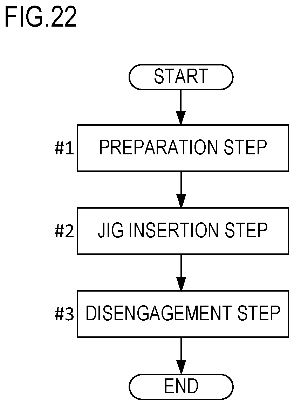

Referring to FIG. 22, the process of disassembling the optical scanning device 100 includes a preparation step #1, a jig insertion step #2, and a disengagement step #3. The preparation step #1 is a step of placing the jig 4 under the housing 2 to which the lid member 3 is attached. The jig insertion step #2 is a step of inserting the jig 4 into the groove portions 221 from under the housing 2 to bring the jig 4 to engagement positions EP (see FIG. 18) of the engagement protrusions 222 and the engagement holes 322. The disengagement step #3 is a step of inserting the jig 4 in the lateral spaces between the groove portions 221 and the suspended portions 321 to elastically deform the suspended portions 321 each in the direction away from the corresponding one of the groove portions 221 to thereby disengage the engagement protrusions 222 from the engagement holes 322.

In the present embodiment, where the engagement protrusions 222 are disposed in the groove portions 221 penetrating the side wall portion 22 in the up-down direction, it is possible to detach the lid member 3 from the housing 2 by using the jig 4. Thus, despite the firm attachment of the lid member 3 to the housing 2 is achieved by attaching the lid member 3 to the housing 2 with the plurality of housing attachment portions 220, the lid member can still be detached from the housing 2 with ease. That is, it is possible to secure the dust-proofness of the optical scanning device 100 while allowing smooth detachment of the lid member 3 from the housing 2.

Here, the jig 4 used in the present embodiment includes the plurality of detachment portions 41. Thus, in the jig insertion step #2, the jig 4 (specifically, the detachment portions 41) is simultaneously inserted to the engagement positions EP. Then, in the disengagement step #3, at the engagement positions EP, the engagement protrusions 222 are simultaneously disengaged from the engagement holes 322. Thus, even though the attachment of the lid member 3 with respect to the housing 2 (that is, the engagement between the engagement protrusions 222 and the engagement holes 322) is achieved at a plurality of positions, the attachment can be released simultaneously at the plurality of positions.

Further, in the present embodiment, as illustrated in FIG. 7 to FIG. 9, in each of the lower end parts of the groove portions 221, a groove-portion lower-end surface 221b, which faces the outward lateral direction, is inclined in the inward lateral direction toward the downward direction. With this configuration, when inserting the jig 4 (specifically, the leading edges of the detachment portions 41) from under the housing 2 into the groove portions 221, it is possible to prevent the jig 4 from being caught by the lower ends of the groove portions 221. That is, it is possible to achieve smooth insertion of the jig 4 into the groove portions 221.

Note that, in the example illustrated in each of FIG. 7 and FIG. 9, the side wall portion 22 includes, in a middle part thereof between the upper and lower ends thereof, a depressed portion 20 depressed in the inward lateral direction. The groove portion 221 extends from the upper end of the side wall portion 22, across the depressed portion 20, to the lower end of the side wall portion 22.

Thus, in the present embodiment, in the depressed portion 20, an upper part 20a of an inner edge thereof is inclined in the inward lateral direction toward the downward direction. In other words, in the inner edge of the depressed portion 20, the upper part 20a is chamfered. This helps prevent the jig 4 from being caught by the inner edge of the depressed portion 20 when the housing 2 is pushed down with the jig 4 inserted in the groove portions 221.

It should be understood that the embodiment disclosed herein is illustrative and non-restrictive in every respect. The scope of the present disclosure is defined by the appended claims, rather than the foregoing description of the embodiment. It is intended to include any modifications within the scope and meaning equivalent to the claims.

## Claims

1. An optical scanning device (100), comprising:
a scanning optical system (1) that deflects and scans light emitted from a light source (10);
a housing (2) that includes a bottom portion (21) and a side wall portion (22) standing upright from the bottom portion (21) and that houses the scanning optical system (1) in a housing region (100A) which is a region enclosed by the bottom portion (21) and the side wall portion (22); and
a lid member (3) that includes a top surface portion (31) that covers the housing region (100A) from above and a peripheral portion (32) that is disposed outside the side wall portion (22) in a lateral direction,
wherein
the housing (2) includes
a groove portion (221) depressed inward from a laterally outer side of the side wall portion (22) and extends in an up-down direction and
a side-wall engagement portion (222) disposed in the groove portion (221), the lid member (3) includes
a suspended portion (321) hanging down from the peripheral portion (32) and
a suspended engagement portion (322) disposed in the suspended portion (321),
the groove portion (221) penetrates the side wall portion (22) in the up-down direction as seen from the up-down direction, and
in a state where the lid member (3) is attached to the housing (2), the suspended portion (321) is located in the groove portion (221) as a result of being inserted from above into the groove portion (221), with the side-wall engagement portion (222) in engagement with the suspended engagement portion (322) in the up-down direction.

2. The optical scanning device (100) according to claim 1,
wherein
the side-wall engagement portion (222) is a protrusion (222) protruding from the groove portion (221) toward an outward lateral direction,
the suspended engagement portion (322) is an engagement hole (322) which is a through hole penetrating the suspended portion (321) from a laterally outer side toward a laterally inner side of the suspended portion (321), and
in a state where the lid member (3) is attached to the housing (2), the protrusion (222) is in engagement with an inner edge of the engagement hole (322) in the up-down direction.

3. The optical scanning device (100) according to claim 1 or 2,
wherein
the side wall portion (22) consists of four sub-wall portions (22A, 22B, 22C, 22D) arranged so as to enclose the housing region (100A) in a rectangular shape as seen in the up-down direction,
the side-wall engagement portion (222) includes a plurality of the side-wall engagement portions (222) disposed in at least three of the sub-wall portions (22A, 22B, 22C, 22D), and
the suspended engagement portion (322) includes a same number of the suspended engagement portions (322) as the side-wall engagement portions (222), the suspended engagement portions (322) each engaging with a corresponding one of the side-wall engagement portions (222).

4. The optical scanning device (100) according to any one of claims 1 to 3,
wherein
in a leading end part of the suspended portion (321), a suspended-portion leading-end surface (321a), which faces an inward lateral direction, is inclined in an outward lateral direction toward a downward direction.

5. The optical scanning device (100) according to any one of claims 1 to 4,
wherein
in an upper end part of the groove portion (221), a groove-portion upper-end surface (221a), which faces an outward lateral direction, is inclined in an inward lateral direction toward an upward direction.

6. The optical scanning device (100) according to any one of claims 1 to 5,
wherein
in a leading end part of the suspended portion (321), a suspended-portion leading-end surface (321a), which faces an inward lateral direction, is inclined in an outward lateral direction toward a downward direction,
in an upper end part of the groove portion (221), a groove-portion upper-end surface (221a), which faces the outward lateral direction, is inclined in the inward lateral direction toward an upward direction, and
an inclination angle of the suspended-portion leading-end surface (321a) with respect to a direction orthogonal to the up-down direction is larger than an inclination angle of the groove-portion upper-end surface (221a) with respect to the direction orthogonal to the up-down direction.

7. The optical scanning device (100) according to any one of claims 1 to 6,
wherein
in a lower end part of the groove portion (221), a groove-portion lower-end surface (221b), which faces an outward lateral direction, is inclined in an inward lateral direction toward a downward direction.

8. The optical scanning device (100) according to any one of claims 1 to 7,
wherein
the side wall portion (22) includes, in a middle part thereof between an upper end and a lower end thereof, a depressed portion (20) depressed in an inward lateral direction,
the groove portion (221) extends from the upper end of the side wall portion (22), across the depressed portion (20), to the lower end of the side wall portion (22), and
an upper part (20a) of an edge of the depressed portion (20) is inclined in the inward lateral direction toward a downward direction.

9. An image forming apparatus (1000) comprising the optical scanning device (100) according to any one of claims 1 to 8.

10. A method for disassembling the optical scanning device (100) according to any one of claims 1 to 8, the method comprising the steps of:
placing a jig (4) under the housing (2) to which the lid member (3) is attached;
inserting the jig (4) into the groove portion (221) from under the housing (2) to cause the jig (4) to reach an engagement position (EP) of the side-wall engagement portion (222) and the suspended engagement portion (322); and
inserting the jig (4) into a lateral space between the groove portion (221) and the suspended portion (321) to elastically deform the suspended portion (321) in a direction away from the groove portion (221) to thereby disengage the side-wall engagement portion (222) and the suspended engagement portion (322) from each other.

11. The method for disassembling the optical scanning device (100) according to claim 10,
wherein
the engagement position (EP) includes a plurality of the engagement positions (EP), and
by inserting the jig (4) simultaneously to the plurality of the engagement positions (EP), the side-wall engagement portion (222) and the suspended engagement portion (322) are disengaged from each other simultaneously at the plurality of the engagement positions (EP).
